(19)

Europäisches
Patentamt
European
Patent Office
Office européen
des brevets

(11) **EP 1 502 700 B1**

(12) **EUROPÄISCHE PATENTSCHRIFT**

(45) Veröffentlichungstag und Bekanntmachung des
Hinweises auf die Patenterteilung:
**11.04.2007 Patentblatt 2007/15**

(51) Int Cl.:
**B23Q 17/22** *(2006.01)* **B23Q 1/58** *(2006.01)*
**F16C 29/06** *(2006.01)*

(21) Anmeldenummer: **03017016.1**

(22) Anmeldetag: **26.07.2003**

(54) **Messsystem**

Measuring system

Dispositif de mesure

(84) Benannte Vertragsstaaten:
**AT BE BG CH CY CZ DE DK EE ES FI FR GB GR
HU IE IT LI LU MC NL PT RO SE SI SK TR**

(43) Veröffentlichungstag der Anmeldung:
**02.02.2005 Patentblatt 2005/05**

(73) Patentinhaber: **Schneeberger Holding AG
4914 Roggwil (CH)**

(72) Erfinder: **Pathe, Volker
76316 Malsch (DE)**

(74) Vertreter: **EGLI-EUROPEAN PATENT
ATTORNEYS
Postfach
8034 Zürich (CH)**

(56) Entgegenhaltungen:
**US-A- 5 584 744 US-B1- 6 174 084**

Printed by Jouve, 75001 PARIS (FR)

**Beschreibung**

Die Erfindung betrifft ein Meßsystem zur Ermittlung und Auswertung von Kräften, die auf Linearlager wirken.

Wälzlagerlinearführungen werden in vielen Bereichen der Technik eingesetzt, in denen ein Bauteil gegenüber einem anderen Bauteil geradlinig und möglichst ohne Reibungsverluste bewegt werden soll. Ein Beispiel hierfür sind Werkzeugmaschinen. Derartige Führungen weisen als Führungskörper einen Wagen oder Schlitten auf, der über Wälzkörper, wie Kugeln, Rollen oder Nadeln, an einer Schiene geführt ist. Die Wälzkörper zirkulieren hierbei in in sich geschlossenen Wälzkörperumläufen des Wagens. Die Führungskörper weisen üblicherweise einen Tragbereich auf, in welchen die Wälzkörper an einer Tragfläche des Wagens und an der Schiene anliegen und hierdurch die zu bewegende Last tragen. Durch die Linearbewegung des Wagens gelangen die Wälzkörper aus der Tragzone in einen ersten Umlenkkanal, in dem die Wälzkörper von der Tragzone in den Rücklaufkanal überführt werden. Nach Durchlaufen des Rücklaufkanals erreichen die Wälzkörper über einen zweiten Umlenkkanal wieder die Tragzone. Bei anderen Bauformen von Linearbewegungsführungen sind die Wälzkörper nicht in Umläufen, sondern ausschliesslich in einer oder mehreren Reihen angeordnet, die parallel zur Längsbewegungsachse verlaufen.

Derartige Linearbewegungsführungen werden zum hochgenauen linearen Verfahren von beispielsweise Werkstück und Werkzeug in Werkzeugmaschinen eingesetzt. Hierbei wirken auf die Linearbewegungsführungen statische und dynamische Kräfte unterschiedlicher und in der Regel nicht bekannter Grösse ein. Dies erschwert die Einhaltung der teilweise extrem hohen Genauigkeitsanforderungen, die an Linearbewegungsführungen gestellt werden. Zudem ist bekannt, daß die Summe dieser Kräfte auf die Lebensdauer der Linearbewegungsführungen Einfluss haben kann.

Zur Bestimmung der Lebensdauer und/oder von Wartungszyklen von Linearbewegungsführungen werden deshalb in der Regel auf theoretischen Überlegungen basierende Annahmen getroffen. Aufgrund sich von diesen Annahmen ergebenden Zeitpunkten werden dann die Linearbewegungsführungen gewartet bzw. ganz oder teilweise gegen neue Führungen getauscht.

Hieran kann jedoch nicht zufrieden stellen, dass insbesondere unvorhergesehene Ereignisse zu einer erheblichen Verkürzung der Lebensdauer bzw. der Wartungszyklen führen können. Derartige Ereignisse können beispielsweise ein Ausfall des Schmiersystems, Kollisionen zwischen Werkstück und Werkzeug, stark erhöhte Umgebungstemperaturen, Eindringen von Schmutz, etc. sein. Sie führen in der Regel zu erhöhten Belastungen auf die Führungen, was schlimmstenfalls sogar eine Zerstörung des Lagers und möglicherweise auch der Maschine bedeuten kann.

Um solche Auswirkungen möglichst auszuschließen, können Linearbewegungsführungen unter Verwendung von quantitativ hohen Sicherheitsfaktoren ausgelegt werden. Dies hat aber den Nachteil, dass die Führungen oftmals weit vor Erreichen der eigentlich erreichbaren Lebensdauer bzw. Wartungszyklen ausgetauscht bzw. gewartet werden.

Aus US 6174084 B1 ist eine Linearbewegungsführung bekannt, die einen längs einer Schiene bewegbaren Wagen aufweist, wobei der Wagen über Wälzkörper auf an der Schiene ausgebildeten Laufflächen für die jeweiligen Wälzkörper gelagert ist. Die Linearbewegungsführung umfasst eine flexible Struktur, die entweder in den Wagen oder in die Schiene integriert ist und zumindest mit einer Teilmenge der Wälzkörper derart in Kontakt steht, dass eine auf den Wagen wirkende Last eine Auslenkung der flexiblen Struktur bewirkt. Ein piezoelektrischer Kraftsensor ist vorgesehen, um eine auf die flexible Struktur wirkende Kraft zu registrieren. Weiterhin ist ein aktives Stellglied (Druckwandler) vorgesehen, mit dem eine Kraft auf die flexible Struktur übertragbar ist, um die Wirkung einer auf den Wagen wirkenden externen Last zu kompensieren. Die Längenausdehnung des Stellgliedes kann mit einem Wegsensor kontrolliert werden. Weiterhin ist vorgesehen, mit Hilfe eines Wegsensors die Auslenkung eines an dem Wagen der Linearbewegungsführung befestigten Maschinentisches bezüglich eines externen Referenzbalken zu messen.

Der Erfindung liegt deshalb die Aufgabe zugrunde, eine bessere Möglichkeit zur Überprüfung des Zustandes von Linearbewegungsführungen zu schaffen.

Die Aufgabe wird erfindungsgemäss durch ein Meßsystem gelöst, das mindestens einen an einem der Führungskörper angebrachten Sensor zur Durchführung von Messungen aufweist, mit dem als Ergebnis jeder Messung ein Meßsignal erzeugbar ist, das von einer kraftbedingten Belastung auf den Führungskörper abhängig ist, und wobei das Meßsystem mit einer Auswerteeinheit versehen ist, der die Messsignale zu einer Aufbereitung zuführbar sind.

Bei Linearführungen können eine Vielzahl an Belastungsformen auftreten, die sich zudem an unterschiedlichen Stellen der Führungskörper in unterschiedlicher Form äußern. Es können deshalb besondere Vorteile erreicht werden, wenn an einem der Führungskörper mehrere Sensoren vorgesehen sind, um Belastungen mit unterschiedlichen Richtungen detektieren zu können.

Je genauer die auf Linearbewegungsführungen wirkenden Kräfte bekannt sind, um so besser können die Linearbewegungsführungen ausgelegt werden. Mit der erfindungsgemäßen Linearbewegungsführung können beispielsweise im Rahmen von Laborversuchen oder bei Prototypen, die im Bereich von Linearbewegungsführungen einer geplanten Maschine auftretenden Belastungen ermittelt werden. Es können somit tatsächliche Belastungen berücksichtigt werden, die aufgrund von unvorhergesehenen und bei der Konstruktion der Maschine nicht bedachten Sachverhalten auftreten. Die hieraus gewonnenen Erkenntnisse können dann in die weitere Entwicklung der Maschine einfließen. Dies kann zu einer geeigneten Anpassung der Maschine und/oder zu einer geänderten Auslegung der Linearbewegungsführung führen.

Insbesondere im Zusammenhang mit den letztgenannten Anwendungsfällen kann eine Auswerteeinheit ausreichend sein, die eine Anzeigeeinrichtung aufweist. Die Aufbereitung der Messsignale kann in diesem Fall im wesentlichen in einer visuell wahrnehmbaren Darstellung von Informationen über die Quantität der Belastungen bestehen. Die dargestellten Informationen können beispielsweise die Messsignale selbst sein.

Bei bevorzugten weiteren erfindungsgemäßen Ausführungsformen können mit der Auswerteeinheit die Quantität der Belastungen oder von ihr abhängige Grössen bestimmt werden. Eine Möglichkeit hierbei besteht darin, Amplituden bzw. Peaks der einwirkenden Kräfte zu ermitteln. Die Bestimmung der auftretenden und damit gemessenen Kräfte kann beispielsweise durch eine Berücksichtigung der Einzelsignale multipliziert mit einer für den jeweiligen Führungskörper spezifischen Konstanten (Skalierungsfaktor) ermittelt werden. Die Konstante wiederum kann durch Vergleichsmessungen mit bekannten Kräften bestimmt werden.

Das Meßsystem kann aber auch verwendet werden, um beispielsweise aufgrund eines sich anzeigenden frühzeitigen bzw. unvorhergesehenen Versagens der Linearbewegungsführung zu reagieren, bevor ein Schaden eintritt. Hierbei kann der Umstand genutzt werden, dass ein Versagen einer Linearbewegungsführung in vielen Fällen auf einem fortschreitenden Verschleiß beruht. Verschleiß bedeutet in der Regel wiederum ein Ansteigen der Belastungen im Bereich der Linearbewegungsführung. So kann in diesen Fällen beispielsweise die Maschine, in die die Linearführung eingebaut ist, rechtzeitig abgeschaltet werden.

Gleiches gilt beim Einwirken von verschleißunabhängigen unzulässig hohen Fremdkräften auf die Führung, beispielsweise aufgrund einer Kollision zwischen einem Werkstück und einem Werkzeug einer Werkzeugmaschine. Die Auswerteeinheit, die in einer bevorzugten Ausführungsform durch eine entsprechende Auswertung der Signale in Echtzeit des zumindest einen Sensors eine unzulässig große Belastung, insbesondere Kraft, feststellt, kann an die Steuerung der Maschine ein entsprechendes Warnsignal senden. Die Steuerung schaltet hieraufhin die Maschine dann ab.

In einer anderen bevorzugten Weiterbildung der Erfindung können die in einem Betriebsintervall der Linearbewegungsführung gemessenen Belastungen verwendet werden, um eine kraftbedingte Gesamtbelastungsgrösse des jeweiligen Betriebsintervalls und/oder der gesamten Einsatzzeit der jeweiligen Führung zu bestimmen. Bei der Bewertung der Einzelsignale können außer dem Betrag auch die Richtungen der einzelnen Belastungen berücksichtigt werden. Mittels Grenzwerten der Gesamtbelastungsgrösse und einem Vergleich der momentanen Gesamtbelastungsgrösse(n) mit dem oder den Grenzwerten sind das Lebensdauerende bzw. das Erreichen bestimmter Wartungszyklen ermittelbar. Solche Ausführungsformen der Erfindung ermöglichen somit, das Erreichen der Lebensdauerenden bzw. das Erreichen eines Wartungszyklusses von Linearbewegungsführungen besser zu bestimmen, als dies bisher möglich war.

Soweit die Erfindung die Zustandsbestimmung von Linearbewegungsführungen betrifft, liegt ihr in Abkehr der seit langem üblichen Praxis der Gedanke zugrunde, nicht von angenommenen Belastungen, sondern von tatsächlich eingetretenen Belastungen auszugehen, die im Bereich der jeweiligen Linearbewegungsführung aufgetreten sind. Als Belastungen sollten vor allem Kräfte ermittelt werden, die in die Linearbewegungsführung eingeleitet werden. Auf Basis der Summe von tatsächlichen Belastungen können dann bei Erreichen von Grenzwerten geeignete Maßnahmen eingeleitet werden. Die Maßnahmen können beispielsweise in der Durchführung einer Wartung der Führung oder in deren Austausch bestehen.

Auch unabhängig von vorausgegangen Belastungen kann jedoch bereits eine einzige übergroße Belastung zu einem unzulässigen Zustand der Linearbewegungsführung führen. Ein unzulässiger Zustand kann beispielsweise eine irreversible Beschädigung oder auch eine Verformung der Führung sein, mit der die geforderte Führungsgenauigkeit nicht mehr eingehalten wird. Es können deshalb bereits Vorteile erzielt werden, wenn mit einem Komparator der Auswerteeinheit lediglich die Signale des zumindest einen Sensors mit einem oder mehreren Schwellwerten verglichen werden. Bei Überschreitung der Schwellwerte sind dann durch die Auswerteeinheit Aktionen auslösbar, beispielweise die Ausgabe von akustischen oder anderen Warnsignalen. Die Warnsignale können dann zu individuell einzuleitenden Maßnahmen führen, beispielsweise einem Abschalten der jeweiligen Maschine.

Je nach Ursache der Kräfte können unterschiedliche Meß- bzw. Überwachungsstrategien sinnvoll sein. Es bieten sich hierbei insbesondere die beiden nachfolgenden unterschiedlichen Ausführungen von Kraftmeßsystemen an.

Bei dem ersten werden kraftinduzierte Materialspannungen in einem Führungskörper, insbesondere in einem Wagen der Führung, ermittelt. Es wird hierbei die physikalische Gesetzmä-ßigkeit genutzt, dass in einen Körper eingeleitete Kräfte Verformungen (beispielsweise Dehnungen oder Stauchungen) hervorrufen, die messbar sind. Von der Größe der Verformungen kann auf die Größe der Belastung geschlossen werden. Zur Messung der Verformung können beispielsweise an sich bekannte Dehnungsmessstreifen benutzt werden. Dieses Verfahren hat den Vorteil, daß die jeweiligen maximalen Kräfte inklusive der Vorspannung der Linearbewegungsführung genau erfasst werden können.

Eine besonders einfache und sichere Vorgehensweise zur Berücksichtigung der Vorspannkräfte kann darin bestehen, eine Initialmessung durchzuführen, zu deren Beginn der Wagen der Linearführung noch nicht auf der Schiene angeordnet ist. Wird der Wagen dann auf die Schiene montiert und werden hierbei Vorspannungen aufgebracht, können durch Vergleich der Signale vor und nach der Montage die Grösse der Vorspannkräfte ermittelt werden.

Das zweite Kraftmeßsystem basiert auf einer Messung von kraftinduzierten Bewegungen. Es nutzt hierbei federelastische Eigenschaften der Wälzpartner (Wälzkörper, Wagen und Schiene) der Linearbewegungsführungen aus. Belastungen auf einen der Führungskörper führen unter anderem durch eine federelastische Verformung, beispielsweise der Wälzkörper, zu Relativbewegungen gegenüber dem anderen Führungskörper, insbesondere zu Relativbewegungen quer zur Führungsachse. Die Größe der Relativbewegungen können durch geeignete Sensorelemente bestimmt werden, beispielsweise mit solchen, die auf dem Wirbelstromprinzip beruhen. Auch in diesem Fall können von der Quantität der Relativbewegungen Rückschlüsse zumindest auf den Betrag der Kräfte gezogen werden. Dieses Meßsystem hat zudem den Vorteil, daß sich alle Lagerkräfte und -momente vorzeichenrichtig erfassen lassen.

In einer bevorzugten Weiterbildung können Sensoren für beide vorgenannte Meßmethoden vorgesehen sein. Hierdurch können die Vorteile beider Meßmethoden bzw. Sensortypen genutzt werden. Zudem ermöglicht dies, Nachteile der einzelnen Sensortypen zumindest zu reduzieren oder zu vermeiden. So lassen sich beispielsweise mit der Messung von kraftinduzierten Materialspannungen Vorspannkräfte erfassen, während dies mit Wegsensoren nur schwer möglich ist.

Es kann zweckmäßig sein, die Daten der Messungen in Speichermitteln zwischenzuspeichern. So können beispielsweise die Daten unmittelbar nach ihrer Entstehung in die Speichermittel geschrieben werden. Vorzugsweise können die Meßsignale zunächst durch geeignete Mittel einer Vorverarbeitung unterzogen werden. Eine solche Vorverarbeitung kann beispielsweise in einer analog-digital Wandlung bestehen.

Eine Zwischenspeicherung der Messergebnisse vor ihrer Auswertung kann insbesondere dann von Vorteil sein, wenn die Auswerteeinheit mit dem Führungskörper nicht ständig verbunden ist. Damit ist es beispielsweise möglich, mit nur einer Auswerteeinheit die Daten von mehreren Führungskörpern auszuwerten. Außerdem kann damit die Auswerteeinheit den oftmals sehr rauen Einsatzbedingungen von Linearbewegungsführungen entzogen werden.

Das Auslesen der Daten kann in bestimmten Zyklen erfolgen. Die ausgelesenen Daten werden der Auswerteeinheit zugeführt, die je nach Art der Anwendung aus den Daten bestimmte Zielgrößen bestimmt. Als Zielgröße kann beispielsweise die Gesamtbelastungsgröße oder die aufgetretene Maximalkraft an einer oder mehreren Meßstellen in Frage kommen. Auch die bereits ermittelten Zielgrößen können für eine weitere Bearbeitung in Speichermitteln abgelegt werden.

In einer anderen Ausführungsform kann die Auswerteeinheit ständig mit dem zumindest einen Sensor in Verbindung stehen. Die vom Sensor erzeugten Messdaten können damit unmittelbar nach ihrer Entstehung an die Auswerteeinheit zur Bestimmung der Zielgrösse(n) übermittelt werden. Eine solche erfindungsgemäße Ausgestaltung ist beispielsweise für eine Überwachung von Linearführungen auf unzulässig hohe Belastungen einsetzbar. Die Auswertung kann dann mit Vorteil in Echtzeit erfolgen.

Eine besonders bevorzugte erfindungsgemäße Ausführungsform - die jedoch auch selbstständige Bedeutung hat - betrifft eine Kompensationseinrichtung, die eines der zuvor beschriebenen Meßsysteme aufweist. Dieser Kompensationseinrichtung können die Messsignale zugeführt und von ihrer Auswerteeinrichtung ausgewertet werden. Stellelemente der Kompensationseinrichtung erzeugen vorzugsweise Hubbewegungen und dadurch Kräfte, die den Auswirkungen der Belastungen entgegenwirken.

Für die Qualität eines Bearbeitungsergebnisses einer Werkzeugmaschine ist im wesentlichen die Vermeidung von kraftbedingten Verformungen entscheidend, die aufgrund der Bearbeitungskräfte entstehen können. Diese werden zwar nur zu einem Teil von Verformungen der Linearbewegungsführungen verursacht. Es kann trotzdem sinnvoll sein, durch entsprechende schnell ansprechende Stellelemente, wie beispielsweise Piezosteller, diesen Verformungen durch entgegengesetzte Kräfte oder Momente gleichen Betrags entgegenzuwirken. Wird einem Piezosteller elektrischer Strom zugeführt, so führt dieser einen Stellweg aus, wobei ein funktionaler Zusammenhang zwischen der Stromgröße und der Größe des Stellweges besteht. Solche Stellelemente können an geeigneten Stellen zwischen der Linearbewegungsführung und Maschinenständer vorgesehen sein.

In einer besonders bevorzugten anderen Ausführungsform einer Kompensationseinrichtung werden Schwingungen kompensiert bzw. gedämpft, die durch Bearbeitungen einer Maschine zwischen der Bearbeitungsstelle und der Linearbewegungsführung bzw. der Führung und dem Maschinenbett entstehen können. Solche Schwingungen können insbesondere Oberflächen von zu bearbeitenden Werkstücken negativ beeinflussen. Hierzu eignen sich Stellantriebe, deren Stellelemente nur wenige Mikrometer oder Bruchteile hiervon Stellweg haben, beispielsweise Piezosteller.

In diesem Zusammenhang kann beispielsweise die Kraft ermittelt werden, die momentan parallel zur Wirkrichtung bzw. Bewegungsrichtung des jeweiligen Stellantriebs wirkt. Die kraftproportionale Messspannung wird verstärkt und dem Stellelement zugeführt. In einer zweckmäßigen Ausgestaltung der Erfindung kann die Zuführung in Echtzeit so vorgenommen sein, daß die Bewegung des jeweiligen Stellelementes gleichphasig mit der gemessen Kraft erfolgt. Dem schwingungsfähigen System (Linearbewegungsführung und Maschine) wird somit Energie entzogen und die Schwingung damit gedämpft. Der Frequenzbereich ist nur durch die Grenzfrequenz des Messsystems begrenzt, die typischerweise bei beispielsweise 5 kHz liegen kann. Damit sind Maschinenschwingungen von 0 Hz bis etwa 500 Hz, einschließlich nichtharmonischer Schwingungen, dämpfbar. Berechnungen hierzu können in den Recheneinheiten vorgenommen werden, mit denen handelsübliche Stellelemente in der Regel ausgestattet sind.

Eine andere Ausführungsform der Kompensationseinrichtung kann auch ohne Stellelemente auskommen. Bei dieser Ausführungsform können der Maschinensteuerung die vom Meßsystem ermittelten Informationen über momentan auf die Linearbewegungsführung einwirkenden Kräfte und/oder Momente zur Verfügung gestellt werden. In Abhängigkeit des Betrages und der Wirkrichtung der jeweiligen aufgrund einer Belastung auftretenden Verformung kann die Steuerung diese Verformung bei der Bestimmung der Verfahrwege durch Addition bzw. Subtraktion entsprechender Kompensationswege gleichen Betrages ausgleichen.

Weitere bevorzugte Ausgestaltungen der Erfindung ergeben sich aus den abhängigen Ansprüchen.

Die Erfindung wird anhand der in den Figuren schematisch dargestellten Ausführungsbeispielen näher erläutert; es zeigen:

Fig. 1 eine Querschnittsdarstellung einer Linearbewegungsführung;

Fig. 2 eine stark schematisierte Darstellung eines Messsystems des Wagens von Fig. 1;

Fig. 3 eine perspektivische Darstellung einer Linearbewegungsführung, deren Wagen mit Sensoren eines erfindungsgemäßen Meßsystems versehen ist;

Fig. 4 eine Ansicht einer Stirnseite einer Linearbewegungsführung, die mit Sensoren einer weiteren erfindungsgemäßen Ausführungsform eines Meßsystems versehen ist;

Fig. 5 eine Linearbewegungsführung mit einer erfindungsgemäßen Kompensationseinrichtung in einer Ansicht von vorne;

Fig. 6 ein Schaltbild einer erfindungsgemässen Kompensationseinrichtung einschliesslich eines Meßsystems.

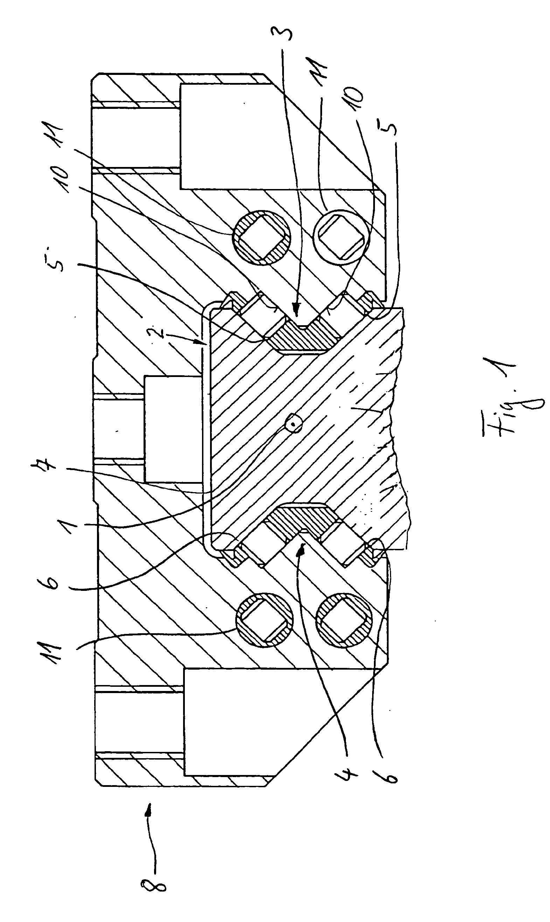

Die in Fig. 1 gezeigte Linearbewegungsführung ist mit einer entlang einer Führungsachse 1 geradlinig verlaufenden profilierten Schiene 2 versehen, die durch eine vorbestimmte Profilierung an ihren beiden Längsseiten 3, 4 jeweils zumindest eine Lauffläche 5, 6 aufweist. Im gezeigten Ausführungsbeispiel sind insgesamt vier Laufflächen 5, 6 vorgesehen. Eine Oberseite 7 der Schiene 2 ist im Wesentlichen eben.

Auf der Schiene 2 ist ein entlang der Führungsachse 1 längsverschiebbarer Wagen 8 angeordnet. Der im Querschnitt U-förmige Wagen 8 kann als metallischer Grundkörper mit an den beiden Stirnseiten angebrachten und jeweils nicht näher dargestellten Endkappen ausgebildet sein. Der Grundkörper und die beiden Endkappen bilden gemeinsam zwei Wälzkörperumläufe in Form von ringförmig geschlossenen Kanälen aus. Hierzu weist der Grundkörper auf einer Innenseite von jedem Schenkel der U-Form jeweils zwei parallel zur Führungsachse 1 verlaufende Tragflächen 10 auf, die sich jeweils gegenüber einer der Laufflächen 5, 6 der Schiene 2 befinden. Die Tragflächen 10 bilden einen Tragbereich des Wagens, in dem Wälzkörper sowohl an der Tragfläche 10 als auch an den Laufflächen 5, 6 der Schiene 2 anliegen und somit Belastungen vom Wagen 8 auf die Schiene 2 oder umgekehrt übertragen können. Eine jeweils parallel zur Tragfläche 10 verlaufende Ausnehmung im Grundkörper dient als Rücklaufkanal 11 des jeweiligen Wälzkörperumlaufs.

In jeder der nicht näher gezeigten Endkappen ist für jeden Wälzkörperumlauf ein beispielsweise etwa halbkreisförmig verlaufender Rücklaufkanal vorhanden, der den jeweiligen Tragbereich mit dem Rücklaufkanal verbindet. Die im Ausführungsbeispiel als zylindrische Rollen 12 ausgebildeten Wälzkörper befinden sich somit in einem geschlossenen Kreislauf und können zwischen dem Tragbereich und dem Rücklaufkanal 11 eines jeden Wälzkörperumlaufs über die Umlenkkanäle zirkulieren.

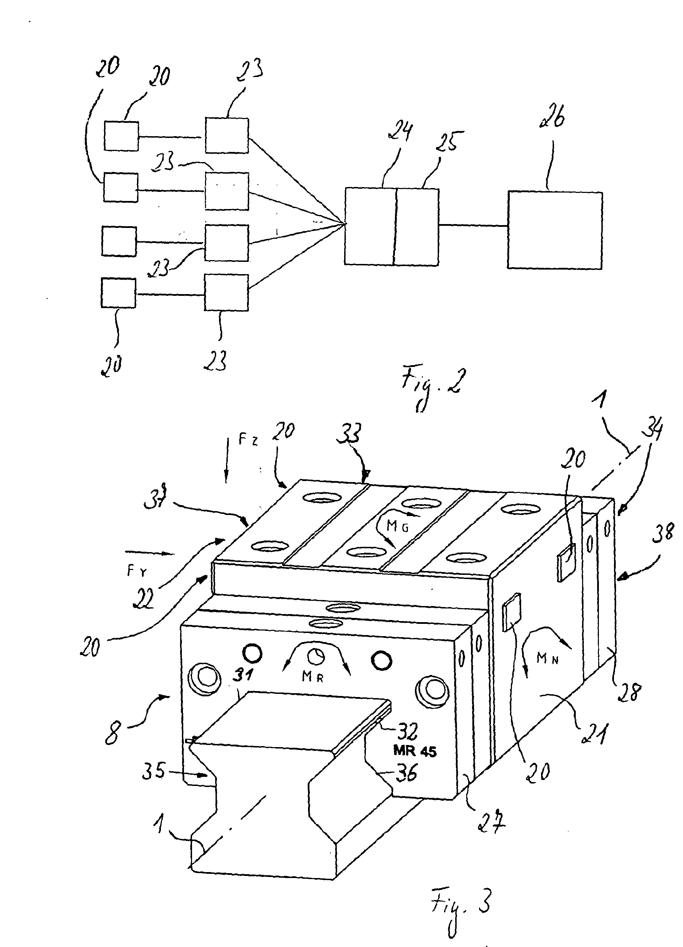

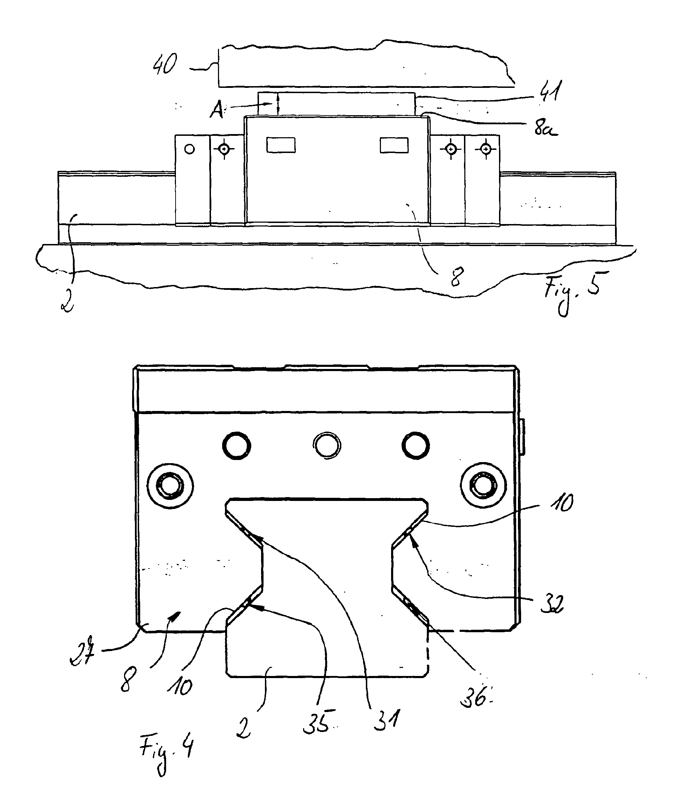

Der Wagen von Fig. 1 weist ein erfindungsgemäßes Meßsystem mit unterschiedlichen Sensortypen auf. Für einen ersten Sensortypus hat das Meßsystem mehrere Meßstellen am Wagen, die in Fig. 2 rein schematisch dargestellt und mit 20 bezeichnet sind. Insgesamt sind vier Meßstellen 20 vorgesehen, von denen jeweils zwei an einer der beiden parallel zur Längsbewegungsachse verlaufenden Seitenflächen 21, 22 im Bereich der oberen Außenkanten des Wagens angebracht sind (Fig. 3). Jede Messstelle 20 weist einen Dehnungsmeßstreifen auf, der mit jeweils vier zu einer Vollbrücke geschalteten Widerständen versehen ist.

Bei Zug- oder Druckbelastungen des Wagens 8 biegen sich dessen Seitenflächen 21, 22 nach außen. Mit den Dehnungsmeßstreifen kann dann die entsprechende Materialspannung gemessen werden. Da mehrere Meßstellen 20 vorhanden sind, können auch andere Belastungsformen als reine Zug- oder Druckbelastungen erkannt und in ihrer Quantität gemessen werden.

Sollen nur Zug- oder Druckkräfte bestimmt werden, könnte nur eine Messstelle 20 ausreichen.

Beispielsweise aufgrund von zu weichen Maschinenbetten - auf denen die Schiene montiert ist - oder durch Fehleinbauten der Führung können Überlagerungen von Zug-/Druckkräften und Drehmomenten auftreten. Hierdurch können ungleichmäßige Belastungen auf den Wagen entstehen. Mit den beschriebenen vier Meßstellen 20 sind auch solche zu einer Überlast führenden Maximalkräfte erkennbar.

Die Signale jeder Meßstelle 20 werden jeweils einem Vorverstärker 23 zugeführt, die daraus jeweils ein analoges Meßsignal generieren. Diese vier Meßsignale stehen dann einer Weiterverarbeitung zur Verfügung, beispielsweise einer Digitalisierung durch einen A/D-Wandler 24 und/oder Speicherung in geeigneten Speichermitteln 25 wie beispielsweise RAM-Bausteinen. Im A/D-Wandler kann eine Zusammenfassung der über einzelne analoge Eingänge zugeführten Meßsignale erfolgen.

Zur Auswertung der Meßsignale werden diese einer Auswerteeinrichtung 26 zugeführt, in der die jeweilige momentane Meßkraft bestimmt wird. Die Meßkraft ergibt sich prinzipiell aus der Summe der momentanen Einzelsignale. Damit die ermittelten Werte auch den tatsächlichen absoluten Werten der auftretenden Kräfte entsprechen, kann der jeweilige Summenwert mit einem vom jeweiligen Wagentyp abhängigen Skalierungsfaktor multipliziert werden. Der Skalierungsfaktor kann durch Vergleichsmessungen bestimmt werden, bei denen die Größe und Richtung der auftretenden Kräfte bekannt sind.

In Fig. 3 und Fig. 4 sind weitere Sensoren des erfindungsgemäßen Meßsystems dargestellt. Mit diesen werden Relativbewegungen des Wagens 8 quer zur Führungsachse der Führung und damit zur Schiene 2 detektiert. Hierzu sind am Wagen 8 im Bereich von dessen beiden stirnseitigen Enden gegenüber jeder der vier Laufflächen 5, 6 der Schiene 2 jeweils ein Wegsensor 31, 32, 33, 34, 35, 36, 37, 38 angebracht. Die Wegsensoren 27 detektieren eine Veränderung ihres Abstandes zur jeweils gegenüberliegenden Lauffläche 5, 6 der Schiene 2. Abstandsveränderungen können durch Belastungen entstehen, die auf den Wagen einwirken. Sobald der Wagen 8 mit einer Kraft oder einem Moment belastet wird, werden die Wälzkörper gestaucht, wodurch sich dann der Abstand der Tragfläche des Wagens und die Laufbahn der Schiene ändert.

Die Wegsensoren 31 - 38 können beispielsweise in plattenförmigen Messgehäusen 27, 28 untergebracht sein, die an jede der beiden Stirnseiten des Wagens 8 befestigt sind. Im Ausführungsbeispiel befinden sich die Wegsensoren 31, 32, 35, 36 in einem in Fig. 4 vorderen Meßgehäuse 27, während die hinteren Sensoren 33, 34, 37, 38 in hinteren Meßgehäuse 28 angebracht sind. Es ist daher auch mit nur geringem Aufwand möglich, ältere Linearbewegungsführungen mit einem solchen Meßsystem nachzurüsten.

Prinzipiell können Wegsensoren beliebiger Bauart verwendet werden. Im dargestellten Ausführungsbeispiel werden Wegsensoren 31 - 38 benutzt, die nach dem Wirbelstromverfahren arbeiten. Ihr Wirkprinzip basiert auf der unterschiedlichen Dämpfung des Stromflusses durch eine Spule, wenn sich diese in unterschiedlichen Abständen zu einer metallischen Oberfläche befindet. Die im Detail nicht näher dargestellten Sensoren weisen eine kleine Kupferspule auf, die zusammen mit einem Kondensator einen elektrischen Schwingkreis bildet. Die Dämpfung des Schwingkreises ist abhängig vom Abstand der Spule zur Oberfläche der jeweiligen Lauffläche 5, 6. Durch geeignete Wahl der geometrischen Abmessungen der Spule, insbesondere des Durchmessers der Spule, kann der Meßbereich an die jeweiligen Anforderungen angepaßt werden.

Diese Sensoren arbeiten berührungslos und haben somit keinen Verschleiß. Zudem sind sie unempfindlich gegen Verschmutzungen wie Kühlschmiermittel oder Schmieröl. Wirbelstromsensoren sind u.a. auch deshalb besonders vorteilhaft, weil sich mit ihnen metallische Verschmutzungen auf der Schiene oder Schienenausbrüche detektieren lassen. Derartige Erscheinungen erzeugen im Wegsignal des jeweiligen Sensors extreme nichtkorrelierte Sprünge. Lagerbelastungen durch Späne oder Lagerzerstörungen durch Pitting oder sonstige Verletzungen der Laufflächen lassen sich somit aufgrund eines solchen Signalverlaufs leicht detektieren.

Diese Messungen werden stets an allen acht Wegsensoren 27 durchgeführt. Durch Summen- und Differenzbildung der einzelnen Sensorsignale bzw. Messungen können beide Kraftrichtungen senkrecht zur Führungsachse 1 und alle drei möglichen Drehmomentrichtungen vorzeichenrichtig ermittelt und ausgewertet werden.

Die Meßsignale werden der elektronischen Auswerteeinrichtung zugeführt, die ebenfalls am Wagen angeordnet sein kann. Diese enthält neben einem Frequenzgenerator noch pro Messstelle eine Auswerteeinheit für die Schwingamplitude. Der Frequenzgenerator regt den jeweils eine Spule und einen Kondensator aufweisenden Schwingkreis zu Schwingungen einer konstanten Frequenz an. Die hieraus resultierenden acht Analogsignale werden einer Digitalisierung durch einen A/D-Wandler und nachfolgend einer Speicherung in Speichermitteln zugeführt, die ebenfalls am Wagen angeordnet sein können.

Eine weitere Verarbeitung der so vorbearbeiteten Sensorsignale, gleich für welchen Verwendungszweck, erfolgt vorzugsweise in digitaler Form. Hierzu können die Sensorsignale aus den Speichermitteln ausgelesen und der Auswerteeinrichtung zugeführt werden. Dort kann anschließend die Bestimmung der tatsächlichen Belastungen in absoluten Werten mittels einer Rechnereinheit der Auswerteeinrichtung erfolgen.

Die Kräfte und Momente können nach folgenden Formeln bestimmt werden. Hierbei bedeuten $S_{31-38}$ die Meßwerte der Sensoren 31, 32, 33, 34, 35, 36, 37, 38 aus Fig. 4:

$$F_z = C * ((S_{31} + S_{32} + S_{33} + S_{34}) - (S_{35} + S_{36}\ S_{37} + S_{38})$$

$$F_y = C * ((S_{31} + S_{33} + S_{35} + S_{37}) - (S_{32} + S_{34}\ S_{36} + S_{38})$$

$$M_r = C * B * ((S_{31} + S_{33} + S_{36} + S_{38}) - (S_{32} + S_{34} + S_{35} + S_{37})$$

$$M_n = C * L * ((S_{31} + S_{32} + S_{37} + S_{38}) - (S_{33} + S_{34} + S_{35} + S_{36})$$

$$M_g = C * L * ((S_{31} + S_{35} + S_{34} + S_{38}) - (S_{32} + S_{36} + S_{33} + S_{37})$$

Ergibt die Berechnung $(S_{31} + S_{32} + S_{35} + S_{36}) - (S_{33} + S_{34}\ S_{37} + S_{38})$ einen Wert grösser als einen vorbestimmten Grenzwert, so kann auf Störungen durch Pitting oder Späne geschlossen werden. Der vom Wagentyp abhängige Grenzwert kann durch vorausgehende Vergleichsversuche durchgeführt werden, bei der Späne und/oder Pitting vorhanden sind.

Die Konstante C ist wagenspezifisch und muß einzeln für jeden Wagentyp ermittelt werden. Dies kann durch Messungen mit Kraft- und Momenten-Belastungen bekannter Größe geschehen, beispielsweise im Rahmen der konstruktiven Auslegung von Linearbewegungsführungen. Die Konstanten B und L entsprechen Abständen der Sensoren zueinander, wobei L dem Abstand der vier vorderen Sensoren zu den vier hinteren Sensoren wiedergibt. Hinsichtlich des Querschnitts der Linearbewegungsführung entspricht die Konstante B hingegen dem Abstand zweier gegenüberliegender Sensoren, also beispielsweise dem Abstand des Sensors 36 rechts unten zu dem Sensor 31 links oben von Fig. 4. Hierbei wird als Abstand B jeweils der Abstand der jeweiligen Laufbahnmitten der beiden Laufflächen 5, 6 bestimmt, auf die sich die beiden Sensoren beziehen.

Sind in einer Maschine, wie beispielsweise einer Werkzeugmaschine, mehrere Wagen 8 mit Sensoren zur Kraftmessung ausgerüstet, so steigt der Aufwand für die Signalübertragung stark an. Es kann deshalb sinnvoll sein, die Digitalisierung der Daten direkt bei der Sensorelektronik durchzuführen und die Daten dann über ein digitales Bussystem, wie beispielsweise einen CAN-Bus, weiterzuleiten. Der Verkabelungsaufwand, um viele Signale weiterzuleiten, ist bei digitaler Signalform stets geringer als bei analoger Form. Der Aufwand für die Signalübertragung ist dann im wesentlichen unabhängig von der Anzahl der Meßstellen stets gering.

Werden die Messdaten nicht sofort benötigt, kann es sinnvoll sein, diese nach einer Vorverarbeitung in der Messelektronik zu speichern. Ist die Messelektronik mit einer netzunabhängigen Stromversorgung, wie beispielsweise einer Batterie versehen, so kann jegliche Verkabelung entfallen. Dies ist insbesondere für kurzfristige Tests in der Erprobung von Maschinen vorteilhaft, da eine nachträgliche Verkabelung in einer Maschine, die bereits in der Produktion eingesetzt wird, sehr aufwendig ist.

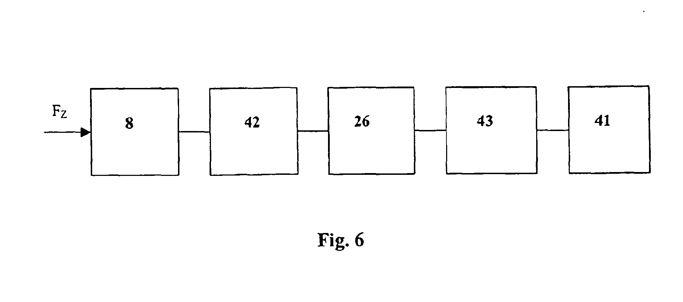

In den Fig. 5 und 6 ist eine erfindungsgemäße Kompensationseinrichtung gezeigt, die ein Messsystem gemäss der Fig. 2 bis 4 als integralen Bestandteil aufweist. Zusätzlich zum Messsystem ist zwischen dem Wagen 8 und einem rein schematisch dargestellten Maschinenständer 40 zumindest ein Piezo-Stellgeber 41 vorgesehen. Es handelt sich hierbei um einen schnell ansprechenden Piezo-Stellgeber, wie er von der Fa. Physik Instrumente (PI) GmbH & Co., Waldbronn, Deutschland, unter der Produktbezeichnung PI Piezo Aktuator angeboten wird. Dieser Stellgeber kann durch Kontraktion oder Expansion Auslenkungen A erzeugen, die in einem Bereich von $\pm$ einigen wenigen $\mu$m liegen.

Der Piezo-Stellgeber 41 ist in der Lage, die Distanz zwischen der Wagenoberfläche 8a und Maschinenständer proportional zur Messkraft zu ändern und gleicht so die durch die Kraft erzeugten Deformationen des Wagens 8 sowie der angrenzenden Maschinenteile aus. Eine Berechnung der Ansteuerspannung bzw. Ansteuersignale des Piezo-Stellgebers 41 auf Basis der Messkraft findet in einem in Fig. 5 nicht näher dargestellten Verstärker des Piezo-Stellgebers 41 statt. Je nach Ausführungsform der Stellgeber können diese dann über analoge oder digitale Schnittstellen - vorzugsweise unabhängig von der Maschinensteuerung - angesteuert werden.

In Fig. 6 ist der Datenfluß schematisch gezeigt, wie er bei der dargestellten Kompensationseinrichtung für einen Piezosteller 41 auftritt. Demnach bewirkt eine auf den Wagen 8 einwirkende Kraft $F_z$ Messsignale der Sensoren. Die Sensoren des Wagens sind in Fig. 6 nicht gezeigt. Die Messsignale werden einem am Wagen befestigten - und mit bis zu 12 Kanälen versehenen - Vorverstärker 42 zugeführt. Das somit vorverstärkte Messsignal gelangt nachfolgend zur Auswerteeinrichtung 26, in der die Kraft $F_z$ berechnet wird. Dies kann prinzipiell in analoger oder in digitaler Weise erfolgen. Das Ergebnis - in Form eines weiteren Signals - der Auswerteeinrichtung 26 wird durch einen Verstärker 43 zu einem Ansteuersignal für den Piezo-Stellgeber 41 aufbereitet. Das Ansteuersignal bewirkt schliesslich eine von der Kraft $F_z$ abhängige Hubbewegung des Piezo-Stellgebers 41 in Z-Richtung eines kartesischen Koordinatensystems. Ansteuersignale für in andere Raumrichtungen wirkende Piezo-Stellgeber könnten in prinzipiell gleicher Weise bestimmt werden.

In einer Weiterbildung des Ausführungsbeispiels werden mit dem bzw. den Piezostellgebern Schwingungen des Maschinenständers kompensiert bzw. gedämpft. Auslenkungen der Piezo-Stellgeber werden dazu genutzt, den mit der Meßeinrichtung gemessenen Schwingungen der Maschine Energie zu entziehen und damit die Schwingungen zu dämpfen. Zur Optimierung der Dämpfungseigenschaften ist die Verstärkung und die Phasenlage der Ansteuersignale einstellbar.

**Bezugszeichenliste**

| 1  | Führungsachse |
|----|---------------|
| 2  | Schiene |
| 3  | Längsseite |
| 4  | Längsseite |
| 5  | Lauffläche |
| 6  | Lauffläche |
| 7  | Oberseite |
| 8  | Wagen |
| 10 | Tragfläche |
| 11 | Rücklaufkanal |
| 12 | Rolle |
| 20 | Meßstelle |
| 21 | Seitenfläche |
| 22 | Seitenfläche |
| 23 | Vorverstärker |
| 24 | A/D-Wandler |
| 25 | Speichermittel |
| 26 | Auswerteeinrichtung |
| 27 | Meßgehäuse |
| 28 | Meßgehäuse |
| 31 | Wegsensor |
| 32 | Wegsensor |
| 33 | Wegsensor |
| 34 | Wegsensor |
| 35 | Wegsensor |
| 36 | Wegsensor |
| 37 | Wegsensor |
| 38 | Wegsensor |
| 40 | Maschinenständer |
| 41 | Piezostellgeber |
| 42 | Vorverstärker |
| 43 | Verstärker |

**Patentansprüche**

1. Messsystem einer Linearbewegungsführung,
   welche Linearbewegungsführung einen längs einer Schiene (2) bewegbaren Wagen (8) aufweist, wobei der Wagen über Wälzkörper auf mehreren an der Schiene (2) ausgebildeten Laufflächen (5, 6) für die jeweiligen Wälzkörper gelagert ist,
   welches Messsystem umfasst:

   mindestens einen an dem Wagen (8) angebrachten Sensor (31 - 38) zur Durchführung von Messungen, mit dem als Ergebnis jeder Messung ein Messsignal ($S_{31}$, $S_{32}$, $S_{33}$, $S_{34}$, $S_{35}$, $S_{36}$, $S_{37}$, $S_{38}$) erzeugbar ist, das von einer kraftbedingten Belastung ($F_Y$, $F_Z$, $M_R$, $M_N$, $M_G$) der Linearbewegungsführung abhängig ist, und
   eine Auswerteeinrichtung (26), der das Messsignal zur Durchführung einer auswertenden Weiterverarbeitung zuführbar sind,

**dadurch gekennzeichnet, dass**
der jeweilige Sensor ein Wegsensor (31-38) ist, welcher einen Abstand bezüglich einer der Laufflächen (5, 6) detektiert, und
die Weiterverarbeitung des Messsignals eine Ermittlung der Belastung ($F_Y$, $F_Z$, $M_R$, $M_N$, $M_G$) als Funktion einer Änderung des jeweiligen Abstands ($S_{31}$, $S_{32}$, $S_{33}$, $S_{34}$, $S_{35}$, $S_{36}$, $S_{37}$, $S_{38}$) umfasst.

2. Messsystem nach Anspruch 1, **gekennzeichnet durch** mehrere, an unterschiedlichen Stellen des Wagens (8) angebrachten Sensoren (31 - 38), mit denen jeweils im wesentlichen zeitgleich Messsignale ($S_{31}$, $S_{32}$, $S_{33}$, $S_{34}$, $S_{35}$, $S_{36}$, $S_{37}$, $S_{38}$) ermittelbar sind.

3. Messsystem nach Anspruch 2, **dadurch gekennzeichnet, dass** im Bereich von beiden stirnseitigen Enden des Wagens (8) jeweils gegenüber einer der Laufflächen (5, 6) jeweils mindestens einer der Sensoren (31-38) angeordnet ist.

4. Messsystem nach Anspruch 3, **dadurch gekennzeichnet, dass** im Bereich von beiden stirnseitigen Enden gegenüber den Laufflächen (5, 6) je vier Sensoren (31-38) angeordnet sind.

5. Messsystem nach Anspruch 4, **dadurch gekennzeichnet, dass** die Ermittlung der Belastung eine Ermittlung von auf den Wagen (8) wirkenden Kräften ($F_Y$, $F_Z$) in zwei Richtungen senkrecht zu einer Führungsrichtung (1) und auf den Wagen (8) wirkenden Drehmomenten ($M_R$, $M_N$, $M_G$) in drei Richtungen umfasst.

6. Messsystem nach einem der Ansprüche 1-5, **dadurch gekennzeichnet, dass** der jeweilige Sensor (31-38) in einem Gehäuse (27, 28) untergebracht ist und das Gehäuse an einer Seite des Wagens (8) befestigt ist.

7. Messsystem nach einem der Ansprüche 1-6, **gekennzeichnet durch** zumindest einen weiteren Sensor (20) zur Bestimmung von Materialspannungen des Wagens (8).

8. Messsystem nach einem der Ansprüche 1 bis 7, **gekennzeichnet durch** eine Auswerteeinrichtung (26), mit der unter Einbeziehung von zeitlich nacheinander durchgeführten Messungen eine kraftbedingte Gesamtbelastungsgrösse bestimmbar ist.

9. Linearbewegungsführung mit einem längs einer Schiene (2) bewegbaren Wagen (8), wobei der Wagen über Wälzkörper auf mehreren an der Schiene ausgebildeten Laufflächen (5, 6) für die jeweiligen Wälzkörper gelagert ist, **gekennzeichnet durch** ein Messsystem nach einem der Ansprüche 1 bis 8.

10. Linearbewegungsführung nach Anspruch 9, **dadurch gekennzeichnet, dass** der Wagen (8) einen im Querschnitt etwa U-förmiger Grundkörper aufweist, wobei der Wagen (8) mit zumindest einem Wälzkörperumlauf versehen ist, in dem Wälzkörper von einem Tragbereich (10) in einen Rücklauf (11) zirkulieren.

11. Verfahren zur Zustandsbestimmung einer Linearbewegungsführung, welche Linearbewegungsführung einen längs einer Schiene (2) bewegbaren Wagen (8) aufweist, wobei der Wagen über Wälzkörper auf mehreren an der Schiene (2) ausgebildeten Laufflächen (5, 6) für die jeweiligen Wälzkörper gelagert ist,
**dadurch gekennzeichnet, dass**
mit mindestens einem am Wagen (8) befestigten Wegsensor (31-38) jeweils ein Abstand bezüglich einer der Laufflächen (5, 6)bestimmt wird und Messsignale des mindestens einen Wegsensors einer Auswerteeinrichtung (26) zugeführt werden und aus einer Änderung des jeweiligen Abstands ($S_{31}$, $S_{32}$, $S_{33}$, $S_{34}$, $S_{35}$, $S_{36}$, $S_{37}$, $S_{38}$) eine Belastung ($F_Y$, $F_Z$, $M_R$, $M_N$, $M_G$) der Linearbewegungsführung bestimmt wird.

12. Verfahren nach Anspruch 11, wobei mit mehreren Wegsensoren (31-38) jeweils verschiedene Abstände bezüglich der Laufflächen (5, 6) gemessen werden.

13. Verfahren nach Anspruch 12, wobei im Bereich von beiden stirnseitigen Enden des Wagens (8) jeweils gegenüber einer der Laufflächen (5, 6) mindestens einer der Abstände gemessen wird.

14. Verfahren nach Anspruch 13, wobei im Bereich von beiden stirnseitigen Enden gegenüber den Laufflächen (5,6) mit jeweils vier Wegsensoren (31-38) jeweils vier Abstände gemessen werden.

15. Verfahren nach Anspruch 14, wobei Änderungen der Abstände bestimmt werden und aus den Änderungen jeweils auf den Wagen wirkende Kräfte ($F_Y$, $F_Z$) in zwei Richtungen senkrecht zu einer Führungsrichtung (1) und auf den Wagen wirkenden Drehmomente ($M_R$, $M_N$, $M_G$) in drei Richtungen bestimmt werden.

16. Verfahren nach einem der Ansprüche 11-15, wobei während eines Betriebsintervalls an mehreren aufeinander folgenden Zeitpunkten jeweils eine Belastung gemessen und aus den jeweiligen Belastungen eine Gesamtbelastungsgrösse bestimmt wird.

17. Verfahren nach Anspruch 16, wobei das Lebensdauerende der Linearbewegungsführung und/oder das Erreichen bestimmter Wartungszyklen durch Vergleich der Gesamtbelastungsgrösse mit entsprechend vorgegebenen Grenzwerten ermittelt wird.

**Claims**

1. A measurement system of a linear-motion guide,
   which linear-motion guide has a carriage (8) which is movable along a rail (2), the carriage being mounted, by means of roller elements, on a plurality of running surfaces (5, 6) for the respective roller elements, said running surfaces being realized on the rail (2),
   which measurement system comprises:

   at least one sensor (31 - 38) for effecting measurements which is attached to the carriage (8) and by means of which a measurement signal ($S_{31}$, $S_{32}$, $S_{33}$, $S_{34}$, $S_{35}$, $S_{36}$, $S_{37}$, $S_{38}$) can be generated as a result of each measurement, said measurement signal being dependent on a loading ($F_Y$, $F_Z$, $M_R$, $M_N$, $M_G$) of the linear-motion guide resulting from force, and
   an evaluation device (26), to which the measurement signals can be supplied for the purpose of effecting evaluation as further processing,

   **characterized in that**
   the respective sensor is a displacement sensor (31-38) which detects a distance in respect of one of the running surfaces (5, 6), and
   the further processing of the measurement signal comprises determination of the loading ($F_Y$, $F_Z$, $M_R$, $M_N$, $M_G$) as a function of change in the respective distance ($S_{31}$, $S_{32}$, $S_{33}$, $S_{34}$, $S_{35}$, $S_{36}$, $S_{37}$, $S_{38}$).

2. The measurement system according to claim 1, **characterized by** a plurality of sensors (31 - 38) which are attached to different points of the carriage (8) and by means of which measurement signals ($S_{31}$, $S_{32}$, $S_{33}$, $S_{34}$, $S_{359}$ $S_{36}$, $S_{37}$, $S_{38}$) can be determined substantially at the same time in each case.

3. The measurement system according to claim 2, **characterized in that**, in the region of both front ends of the carriage (8), at least one of the sensors (31 - 38) is in each case disposed opposite to one of the running surfaces (5, 6), respectively.

4. The measurement system according to claim 3, **characterized in that**, in the region of both front ends, four sensors (31-38) are in each case disposed opposite the running surfaces (5, 6).

5. The measurement system according to claim 4, **characterized in that** the determination of the loading comprises determination of forces ($F_Y$, $F_Z$) acting upon the carriage (8) in two directions perpendicular to a guide direction (1), and of torques ($M_R$, $M_N$, $M_G$) acting upon the carriage (8) in three directions.

6. The measurement system according to any one of claims 1 - 5, **characterized in that** the respective sensor (31 - 38) is accommodated in a housing (27, 28), and the housing is attached to one side of the carriage.

7. The measurement system according to any one of claims 1 - 6, **characterized by** at least one further sensor (20) for determining material stresses of the carriage (8).

8. The measurement system according to any one of claims 1 to 7, **characterized by** an evaluation device (26) by means of which a total quantity can be determined for loading caused by force, with the inclusion of measurements effected in temporal succession.

9. A linear-motion guide with a carriage (8) which is movable along a rail (2), the carriage being mounted, by means of roller elements, on a plurality of running surfaces (5, 6) for the respective roller elements, said running surfaces being realized on the rail, **characterized by** a measurement system according to any one of claims 1 to 8.

10. The linear-motion guide according to claim 9, **characterized in that** the carriage (8) has a basic structure which is approximately U-shaped in cross section, the carriage (8) being provided with at least one roller element race in which rolling elements circulate from a bearing region (10) into a return (11).

11. A method for determining the state of a linear-motion guide, which linear-motion guide has a carriage (8) which is movable along a rail (2), the carriage being mounted, by means of roller elements, on a plurality of running surfaces (5, 6) for the respective roller elements, said running surfaces being realized on the rail (2),
**characterized in that**
at least one displacement sensor (31 - 38) attached to the carriage (8) is used in each case to determine a distance in respect of one of the running surfaces (5, 6), and measurement signals of the at least one displacement sensor are supplied to an evaluation device (26), and a loading ($F_Y$, $F_Z$, $M_R$, $M_N$, $M_G$) of the linear-motion guide is determined from a change in the respective distance ($S_{31}$, $S_{32}$, $S_{33}$, $S_{34}$, $S_{35}$, $S_{36}$, $S_{37}$, $S_{38}$).

12. The method according to claim 11, wherein a plurality of displacement sensors (31 - 38) are used in each case to measure various distances in respect of the running surfaces (5, 6).

13. The method according to claim 12, wherein, in the region of both front ends of the carriage (8), at least one of the distances is measured in relation to one of the running surfaces (5, 6) in each case.

14. The method according to claim 13, wherein, in the region of both front ends, opposite to the running surfaces (5, 6), four displacement sensors (31 - 38) are in each case used to measure four distances, respectively.

15. The method according to claim 14, wherein changes in the distances are determined, and forces ($F_Y$, $F_Z$) acting upon the carriage in two directions perpendicular to a guide direction (1), and torques ($M_R$, $M_N$, $M_G$) acting upon the carriage in three directions, are in each case determined from the changes.

16. The method according to any one of claims 11-15, wherein, during an operating interval, respectively one loading is measured at a plurality of consecutive instants, and a total loading quantity is determined from the respective loadings.

17. The method according to claim 16, wherein the end of the service life of the linear-motion guide and/or the reaching of certain servicing cycles is determined by comparison of the total loading quantity with correspondingly predefined limiting values.

**Revendications**

1. Système de mesure d'un guidage de déplacement linéaire, lequel guidage de déplacement linéaire présente un chariot (8) mobile le long d'un rail (2), le chariot étant logé par l'intermédiaire de corps de roulement sur plusieurs surfaces de roulement (5, 6) formées sur le rail (2) pour les différents corps de roulement,
ledit système de mesure comprenant :

au moins un capteur (31 à 38) disposé sur le chariot (8) pour exécuter des mesures, avec lequel, en tant que résultat de chaque mesure, peut être généré un signal de mesure ($S_{31}$, $S_{32}$, $S_{33}$, $S_{34}$, $S_{35}$, $S_{36}$, $S_{37}$, $S_{38}$) qui dépend d'une charge conditionnée par la force ($F_Y$, $F_Z$, $M_R$, $M_N$, $M_G$) du guidage de déplacement linéaire, et un dispositif d'évaluation (26) auquel le signal de mesure peut être amené pour l'exécution d'un traitement ultérieur d'évaluation,

**caractérisé en ce que**
le capteur correspondant est un capteur de déplacement (31 à 38) qui détecte un écart par rapport à une des surfaces de roulement (5, 6), et
le traitement ultérieur du signal de mesure comprend une détermination de la charge ($F_Y$, $F_Z$, $M_R$, $M_N$, $M_G$) en tant que fonction d'une variation de l'écart correspondant ($S_{31}$, $S_{32}$, $S_{33}$, $S_{34}$, $S_{35}$, $S_{36}$, $S_{37}$, $S_{38}$).

**2.** Système de mesure selon la revendication 1, **caractérisé par** plusieurs capteurs (31 à 38) disposés en des endroits différents du chariot (8), permettant chacun de déterminer des signaux de mesure ($S_{31}$, $S_{32}$, $S_{33}$, $S_{34}$, $S_{35}$, $S_{36}$, $S_{37}$, $S_{38}$) de manière essentiellement isochrone.

**3.** Système de mesure selon la revendication 2, **caractérisé en ce que**, dans la zone des deux extrémités frontales du chariot (8), au moins un des capteurs (31 à 38) est disposé chaque fois vis-à-vis d'une des surfaces de roulement (5, 6).

**4.** Système de mesure selon la revendication 3, **caractérisé en ce que**, dans la zone des deux extrémités frontales, quatre capteurs (31 à 38) sont disposés chaque fois vis-à-vis des surfaces de roulement (5, 6).

**5.** Système de mesure selon la revendication 4, **caractérisé en ce que** la détermination de la charge comprend une détermination de forces ($F_Y$, $F_Z$) s'exerçant sur le chariot (8) dans deux directions perpendiculaires à une direction de guidage (1) et de couples de rotation ($M_R$, $M_N$, $M_G$) s'exerçant sur le chariot (8) dans trois directions.

**6.** Système de mesure selon l'une des revendications 1 à 5, **caractérisé en ce que** chaque capteur (31 à 38) est logé dans un boîtier (27, 28) et le boîtier est fixé sur un côté du chariot (8).

**7.** Système de mesure selon l'une des revendications 1 à 6, **caractérisé par** au moins un autre capteur (20) pour la détermination de contraintes de matériau du chariot (8).

**8.** Système de mesure selon l'une des revendications 1 à 7, **caractérisé par** un dispositif d'évaluation (26) avec lequel une grandeur de charge totale conditionnée par la force peut être déterminée en incluant des mesures effectuées successivement dans le temps.

**9.** Guidage de déplacement linéaire avec un chariot (8) mobile le long d'un rail (2), le chariot étant logé par l'intermédiaire de corps de roulement sur plusieurs surfaces de roulement (5, 6) formées sur le rail pour les différents corps de roulement, **caractérisé par** un système de mesure selon l'une des revendications 1 à 8.

**10.** Guidage de déplacement linéaire selon la revendication 9, **caractérisé en ce que** le chariot (8) présente un corps de base à peu près en forme de U dans la section transversale, le chariot (8) étant muni d'au moins une circulation de corps de roulement dans laquelle des corps de roulement circulent d'une zone porteuse (10) dans un mouvement de retour (11).

**11.** Procédé de détermination de l'état d'un guidage de déplacement linéaire, lequel guidage de déplacement linéaire présente un chariot (8) mobile le long d'un rail (2), le chariot étant logé par l'intermédiaire de corps de roulement sur plusieurs surfaces de roulement (5, 6) formées sur le rail (2) pour les différents corps de roulement, **caractérisé en ce que**, avec au moins un capteur de déplacement (31 à 38) fixé sur le chariot (8), un écart par rapport à une des surfaces de roulement (5, 6) est déterminé et des signaux de mesure de l'au moins un capteur de déplacement sont amenés à un dispositif d'évaluation (26) et une charge ($F_Y$, $F_Z$, $M_R$, $M_N$, $M_G$) du guidage de déplacement linéaire est déterminée à partir d'une variation de l'écart correspondant ($S_{31}$, $S_{32}$, $S_{33}$, $S_{34}$, $S_{35}$, $S_{36}$, $S_{37}$, $S_{38}$).

**12.** Procédé selon la revendication 11, dans lequel différents écarts par rapport aux surfaces de roulement (5, 6) sont mesurés avec plusieurs capteurs de déplacement (31 à 38).

**13.** Procédé selon la revendication 12, dans lequel, dans la zone des deux extrémités frontales du chariot (8), au moins un des écarts est mesuré par rapport à une des surfaces de roulement (5, 6).

**14.** Procédé selon la revendication 13, dans lequel, dans la zone des deux extrémités frontales, quatre écarts par rapport aux surfaces de roulement (5, 6) sont chaque fois mesurés avec quatre capteurs de déplacement (31 à 38).

**15.** Procédé selon la revendication 14, dans lequel des variations des écarts sont déterminées et, à partir des variations, des forces ($F_Y$, $F_Z$) s'exerçant sur le chariot dans deux directions perpendiculaires à une direction de guidage (1) et des couples de rotation ($M_R$, $M_N$, $M_G$) s'exerçant sur le chariot dans trois directions sont déterminés.

**16.** Procédé selon l'une des revendications 11 à 15, dans lequel, pendant un intervalle de fonctionnement, une charge est chaque fois mesurée à plusieurs instants successifs et une grandeur de charge totale est déterminée à partir des différentes charges.

**17.** Procédé selon la revendication 16, dans lequel la fin de la durée de vie du guidage de déplacement linéaire et/ou l'atteinte de cycles d'entretien déterminés est obtenue par comparaison de la grandeur de charge totale avec des valeurs limites prédéterminées de manière correspondante.

Fig. 1

Fig. 2

Fig. 3

40

41

A

8a

8

Fig. 5

2

10

32

27

8

10

2     35     31

36

2

Fig. 4

Fz ⟶ | 8 | | 42 | | 26 | | 43 | | 41 |

**Fig. 6**